# EUROPÄISCHE PATENTSCHRIFT

(11) **EP 3 049 851 B1**
(45) Veröffentlichungstag und Bekanntmachung des Hinweises auf die Patenterteilung: **21.04.2021**
(21) Anmeldenummer: 14776642.2
(22) Anmeldetag: 25.09.2014
(51) Int. Cl.: G02B 27/00, G02B 27/01

(54) **ANZEIGEVORRICHTUNG MIT EINEM BRILLENGLAS**
DISPLAY SYSTEM INCLUDING SPECTACLES
DISPOSITIF D`AFFICHAGE COMPRENANT DES LUNETTES

(30) Priorität: 27.09.2013 DE 102013219624
(43) Veröffentlichungstag der Anmeldung: 03.08.2016
(73) Patentinhaber: tooz technologies GmbH, 73430 Aalen (DE)
(72) Erfinder: DOBSCHAL, Hans-Jürgen, 99510 Kleinromstedt (DE); LINDIG, Karsten, 99084 Erfurt (DE)
(74) Vertreter: Patentanwälte Geyer, Fehners & Partner mbB
(86) Internationale Anmeldenummer: PCT/EP2014/070556
(87) Internationale Veröffentlichungsnummer: WO 2015/044301

(56) Entgegenhaltungen:
- EP-A1- 1 385 023
- WO-A1-2006/025317
- US-A1- 2008 198 471
- US-A1- 2009 190 222
- US-A1- 2013 250 429
- US-B1- 8 189 263

## Beschreibung

Die vorliegende Erfindung betrifft eine auf den Kopf eines Benutzers aufsetzbare und ein Bild erzeugende Anzeigevorrichtung mit einem Brillenglas mit den Merkmalen des Oberbegriffs des Anspruches 1.

Ein solches Brillenglas ist häufig so ausgebildet, dass Lichtbündel von Pixeln des erzeugten Bildes über einen Einkoppelabschnitt in das Brillenglas eingekoppelt, im Brillenglas durch interne Totalreflexion an Vorder- und Rückseite bis zu einem Auskoppelabschnitt geführt und dort so umgelenkt werden, dass eine Auskopplung über die Rückseite des Brillenglases erfolgt.

Bei dem Einkoppelabschnitt kann die Schwierigkeit auftreten, dass ein bereits eingekoppeltes bzw. umgelenktes Strahlenbündel nach interner Totalreflexion an der Rückseite erneut auf den Einkoppelbereich trifft und dort in unerwünschter Weise so abgelenkt wird, dass es in Falschlicht überführt wird. Um dies zu verhindern, müßte man die Dicke des Brillenglases größer machen (beispielsweise im Bereich von 10 bis 20 mm), was jedoch unerwünscht ist. Alternativ könnte man das Sichtfeld (Field of View) und/oder die Größe der Austrittspupille bzw. der Eyebox verringern, was jedoch auch unerwünscht ist.

Die EP 1 385 023 A1 zeigt einen Lichtleiter für eine auf den Kopf eines Benutzers aufsetzbare Anzeigevorrichtung, der im Auskoppelabschnitt mehrere teilreflektive Umlenkflächen, die nebeneinander angeordnet sind, aufweist. Die US 2013/0250429 A1 zeigt ein Brillenglas für eine auf den Kopf eines Benutzers aufsetzbare Anzeigevorrichtung, wobei das Brillenglas einen Einkoppelabschnitt und einen davon beabstandeten Auskoppelabschnitt mit einer Fresnel-Struktur aufweist.

Ausgehend hiervon ist es Aufgabe der Erfindung, eine auf den Kopf eines Benutzers aufsetzbare und ein Bild erzeugende Anzeigevorrichtung mit einem Brillenglas bereitzustellen, mit der die eingangs genannten Schwierigkeiten so gut wie vollständig überwunden werden können.

Die Erfindung ist im Anspruch 1 definiert. Erfindungsgemäße Weiterbildungen sind in den abhängigen Ansprüchen angegeben.

Durch diese Ausbildung der Facetten in den beiden Bereichen gemäß Anspruch 1 werden in vorteilhafter Weise im zweiten Bereich zwei optische Funktionen bereitgestellt. Einerseits werden die Lichtbündel, die bereits durch Reflexion an Facetten des ersten Bereiches zur Führung in das Brillenglas eingekoppelt sind, an der ersten Reflexionsfläche so reflektiert, dass sie nach Durchlaufen der Facetten des zweiten Bereiches (die Facetten werden quasi von hinten durchlaufen) in der gewünschten Art und Weise geführt werden. Andererseits werden die Lichtbündel, die noch einzukoppeln sind und erstmalig auf Facetten treffen (in diesem Fall auf Facetten des zweiten Bereiches) in der gewünschten Art und Weise so umgelenkt, dass sie ebenfalls zum Auskoppelabschnitt geführt werden.

Durch dieses Vorgehen können somit bereits eingekoppelte Lichtbündel problemlos auf den zweiten Bereich mit Facetten zur Einkopplung weiterer Lichtbündel treffen, so dass die Ausdehnung des Einkoppelabschnitts in Richtung zum Auskoppelabschnitt nicht durch die Tatsache begrenzt ist, dass bereits eingekoppelte Lichtbündel nicht erneut auf den Einkoppelabschnitt treffen dürfen. Die Gesamtheit aller einzukoppelnder Lichtbündel kann somit in der Richtung vom Einkoppel- zum Auskoppelabschnitt die gewünschte große Ausdehnung aufweisen, um ein großes Sichtfeld und/oder eine große Ausdehnung der Austrittspupille in dieser Richtung bereitzustellen. Natürlich kann der Einkoppelabschnitt auch noch einen dritten und weitere Bereiche aufweisen, der bzw. die sich an den zweiten Bereich anschließen und die in gleicher Weise wie der zweite Bereich bereits eingekoppelte Lichtbündel in der gewünschten Art weiterführt und erstmalig eintretende Lichtbündel so umlenkt, dass die gewünschte Führung zum Auskoppelabschnitt möglich ist. Die Vorderseite und/oder Rückseite des Brillenglaskörpers kann gekrümmt ausgebildet sein.

Unter einer Facette wird insbesondere ein Flächenstück, ein Flächenelement oder eine Fläche verstanden. Das Flächenstück, das Flächenelement bzw. die Fläche kann die beschriebene optische Wirkung der Facette bereitstellen.

Insbesondere kann die erste Reflexionsfläche durch die Vorderseite gebildet sein. Ferner kann die zweite Reflexionsfläche durch die Rückseite gebildet sein.

Alternativ ist es möglich, dass die erste und/oder zweite Reflexionsfläche zwischen Vorder- und Rückseite ausgebildet ist. In diesem Fall kann die erste und/oder zweite Reflexionsfläche auch plan ausgebildet sein.

Die Reflektivität der ersten Reflexionsfläche kann in Richtung vom Einkoppel- zum Auskoppelabschnitt hin zunehmen. Auch die Reflektivität der Facetten kann in dieser Richtung zunehmen.

Der Einkoppelabschnitt und/oder der Auskoppelabschnitt kann eine abbildende Wirkung aufweisen. Ferner kann der Einkoppelabschnitt eine Kollimationswirkung aufweisen.

Insbesondere können die beiden Reflexionsflächen an der Vorderseite und Rückseite ausgebildet sein. Ferner können die Reflexionsflächen die Reflexion durch innere Totalreflexion an Vorder- und Rückseite bewirken.

Die Facetten sind insbesondere so ausgebildet, dass sie keinen gewünschten diffraktiven Effekt bewirken.

Der erste und zweite Bereich des Einkoppelabschnitts weisen bevorzugt jeweils zumindest eine, zwei oder mehrere Facetten auf.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt.

So kann das weitere optische Element z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Das Brillenglas kann aus Glas und/oder Kunststoff hergestellt sein.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung 1;
- Fig. 2: eine vergrößerte Schnittansicht des ersten Brillenglases 3;
- Fig. 3: eine vergrößerte Schnittansicht des Brillenglases 3 zur Beschreibung des Einkoppelabschnitts 20;
- Fig. 4: eine nochmals vergrößerte Darstellung des Einkoppelabschnitts 20 von Fig. 3, und
- Fig. 5: eine vergrößerte Schnittdarstellung des Auskoppelabschnitts 21.

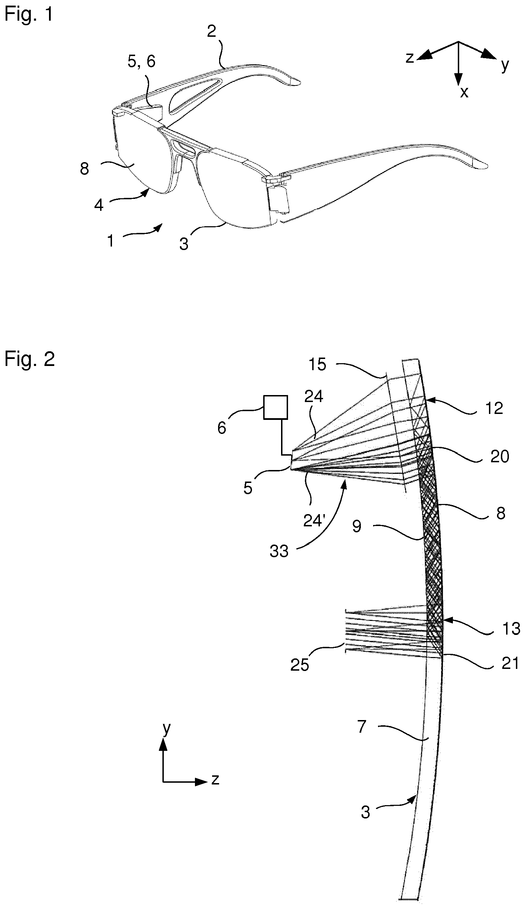

Bei der in Fig. 1 gezeigten Ausführungsform umfaßt die erfindungsgemäße Anzeigevorrichtung 1 eine auf den Kopf des Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei der Benutzer über das erste Brillenglas 3 ein virtuelles Bild in sein Gesichtsfeld eingespiegelt werden kann, wie nachfolgend beschrieben wird.

Die Brillengläser 3, 4 und insbesondere das linke Brillenglas 3 sind nur beispielshalber zusammen mit der erfindungsgemäßen Anzeigevorrichtung 1 beschrieben. Die Brillengläser 3, 4 bzw. zumindest das linke Brillenglas 3 sind jeweils für sich als erfindungsgemäßes Brillenglas 3, 4 ausgebildet. Das erfindungsgemäße linke Brillenglas 3 kann natürlich auch als rechtes Brillenglas ausgebildet sein.

Wie am besten aus der Detailschnittansicht des ersten Brillenglases 3 in Fig. 2 ersichtlich ist (die Haltevorrichtung 2 ist nicht dargestellt), umfaßt die Anzeigevorrichtung 1 ein Bilderzeugungsmodul 5, eine Steuereinheit 6 und eine Einkoppeloptik 15. Das Bilderzeugungsmodul 5, die Steuereinheit 6 und die Einkoppeloptik 15 sind rein schematisch dargestellt und bevorzugt an der Haltevorrichtung 2 befestigt. Das Bilderzeugungsmodul 5 kann z.B. einen flächigen Lichtmodulator, wie z.B. einen OLED-, CMOS- oder LCoS-Chip oder eine Kippspiegelmatrix mit einer Vielzahl von z.B. in Spalten und Zahlen angeordneten Pixeln aufweisen. Von jedem Pixel kann ein Lichtbündel 24 ausgehen.

Das linke Brillenglas 3 weist einen Brillenglaskörper 7 mit einer gekrümmten Vorderseite 8 sowie einer gekrümmten Rückseite 9 auf, wobei an der Vorderseite 8 in einem Randbereich 12 des ersten Brillenglases 3 ein Einkoppelabschnitt 20 ausgebildet ist und in einem Mittelbereich 13 an der Vorderseite 8 des ersten Brillenglases 3 ein Auskoppelabschnitt 21 ausgebildet ist.

Wie in der schematischen Darstellung von Fig. 2 gezeigt ist, werden die vom Bilderzeugungsmodul 5 kommenden Lichtbündel 24, 24' (die ein Gesamtstrahlenbündel 33 bilden) mittels der Einkoppeloptik 15 kollimiert, treten über die Rückseite 9 in das erste Brillenglas 3 ein und treffen dort auf den Einkoppelabschnitt 20, der reflektiv in der Art ausgebildet ist, dass er eine Umlenkung der Lichtbündel 24 so bewirkt, dass diese danach im Brillenglas 3 durch innere Totalreflexion an Rück- und Vorderseite 9, 8 bis zum Auskoppelabschnitt 21 geführt werden. Der Auskoppelabschnitt 21 ist reflektiv ausgebildet und lenkt die Lichtbündel 24, 24' so in Richtung zur Rückseite 9 um, dass diese über die Rückseite 9 aus dem Brillenglas 3 ausgekoppelt werden und bis zu einer Austrittspupille 25 laufen. Der Benutzer kann bei aufgesetzter Haltevorrichtung sein Auge im Bereich der Austrittspupille 25 positionieren und somit das virtuelle Bild wahrnehmen.

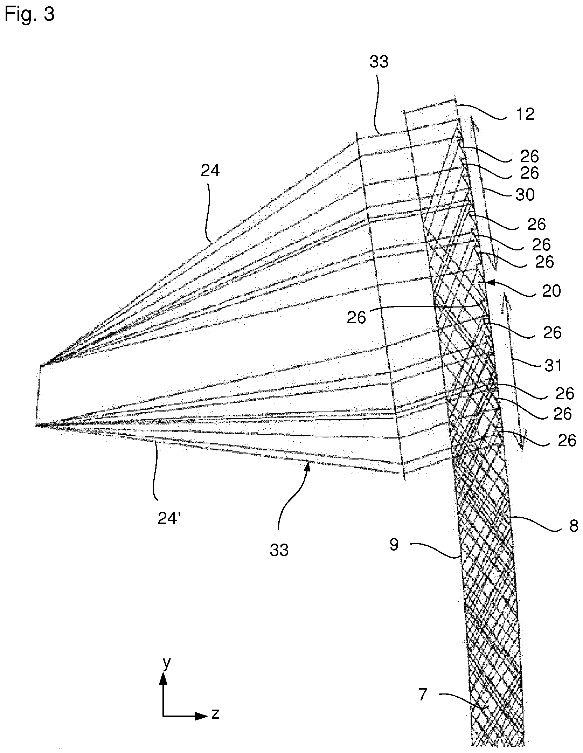

Wie in der vergrößerten Darstellung des Einkoppelabschnittes 20 in Fig. 3 ersichtlich ist, weist der Einkoppelabschnitt 20 eine Vielzahl von nebeneinander angeordneten teilreflektiven Facetten 26 auf, die zur Umlenkung der Lichtbündel 24, 24' dienen, wobei die Facetten 26 im Brillenglaskörper 7 vergraben und in der Richtung vom Einkoppel- zum Auskoppelabschnitt 20, 21 nebeneinander in einem ersten Bereich 30 und einem daran anschließenden zweiten Bereich 31 angeordnet sind. Die Ausdehnung der beiden Bereiche 30, 31 in y-Richtung ist so gewählt, dass sie der Ausdehnung des auf sie treffenden kollimierten Gesamtstrahlenbündels 33 entspricht. Aufgrund dieser Ausdehnung treffen die von den Facetten 26 des ersten Bereiches 30 umgelenkten Strahlenbündel 24 nach innerer Totalreflexion an der Rückseite 9 zur Führung der Strahlenbündel zum Auskoppelabschnitt auf den zweiten Bereich 31, in dem die Facetten 26 zur Umlenkung der Lichtbündel 24' angeordnet sind. Es liegt somit im zweiten Bereich 31 eine Überlagerung von bereits durch innere Totalreflexion geführten Lichtbündeln 24 und noch einzukoppelnden bzw. so umzulenkenden Strahlenbündeln 24', dass sie auch durch innere Totalreflexion geführt werden können, vor.

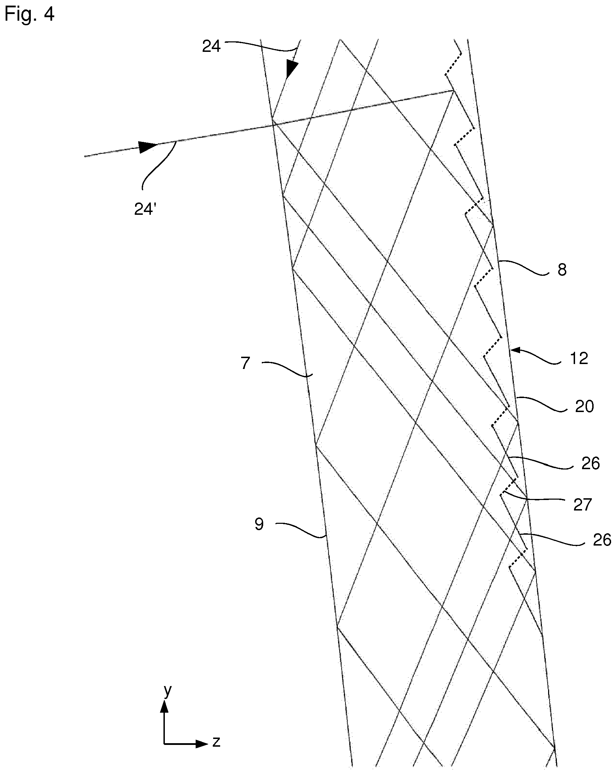

Um diese beiden optischen Anforderungen erfüllen zu können, sind die vergrabenen Facetten 26 im zweiten Bereich 31 jeweils durch transparente oder zumindest teiltransparente Flanken 27 verbunden, die in der vergrößerten Schnittdarstellung des zweiten Bereiches in Fig. 4 gestrichelt dargestellt sind.

Die Lichtbündel 24, die im ersten Bereich 30 des Einkoppelabschnitts 20 umgelenkt werden, treffen nach interner Totalreflexion an der Rückseite 9 auf den zweiten Bereich 31 des Einkoppelabschnittes 20. Aufgrund der beschriebenen transparenten oder teiltransparenten Ausbildung der Flanken 27 laufen die Lichtbündel 24 durch die Flanken 27 und werden an der Vorderseite 8 zur Führung totalreflektiert, laufen von hinten durch die teilreflektiven Facetten 26 im zweiten Bereich 31 und treffen wieder auf die Rückseite 9, so dass durch weitere Totalreflexionen an Rück- und Vorderseite 9, 8 die Lichtbündel 24 bestimmungsgemäß zum Auskoppelabschnitt 21 geführt werden. Die Lichtbündel 24' des kollimierten Gesamtstrahlenbündels 33, die zur Einkopplung erstmalig auf die Facetten 26 (hier im zweiten Bereich 31) treffen, werden zumindest zum Teil so zur Rückseite 9 zurückreflektiert, dass diese dann durch innere Totalreflexion an Rückseite 9 und Vorderseite 10 bis zum Auskoppelabschnitt geführt werden. Somit verwirklicht der zweite Bereich beide optische Anforderungen (Führung der bereits eingekoppelten Lichtbündel 24 und Einkopplung der weiteren Lichtbündel 24'). Wären die Flanken 27, wie bisher üblich, als reflektive Flanken ausgebildet, würde dies zu unerwünschtem Falschlicht führen. Erfindungsgemäß ist somit die Ausdehnung des Einkoppelabschnittes 20 in Richtung der Führung der Lichtbündel 24 im Brillenglas 3 nicht mehr dadurch beschränkt, dass ein bereits umgelenktes Lichtbündel 24 nicht erneut auf den Einkoppelabschnitt 20 treffen darf. Somit kann man selbst bei einem dünnen Brillenglas 3 und einem großen Bild bzw. Bildfeld (Größe des mittels des Bilderzeugungsmoduls 5 erzeugten Bildes) eine große Eyebox bzw. eine große Austrittspupille 25 realisieren.

Die Vorderseite 8 bildet somit im Einkoppelabschnitt 20 eine erste Reflexionsfläche und die Rückseite 9 bildet somit im Einkoppelabschnitt 20 eine zweite Reflexionsfläche, wobei die vergrabenen Facetten 26 zwischen beiden Reflexionsflächen angeordnet sind. Wenn die Flanken 27 im zweiten Bereich 31 transparent sind, sind sie in der Regel nicht mehr sichtbar. Die Darstellung der Flanken 27 in Fig. 3 sowie in Fig. 4 dient nur zum besseren Verständnis der Erfindung. Im ersten Bereich 30 können die die Facetten 26 verbindenden Flanken 27 transparent, teiltransparent oder reflektiv sein. Ferner können die Facetten 26 im ersten Bereich teilreflektiv oder reflektiv sein.

Zur Herstellung des Einkoppelabschnittes 20 müssen lediglich die Vertiefungen für die Facetten 26 an der Vorderseite 8 gebildet werden. Danach sind die Facetten 26 mit der entsprechenden Teilverspiegelungsschicht zu versehen, wobei jedoch die Flanken 27 nicht beschichtet werden.

Danach werden die Facetten 26 bis zum ursprünglichen Radius der Vorderseite 8 aufgefüllt, so dass die Vorderseite 8 auch im Bereich des Einkoppelabschnittes 20 in der beschriebenen Weise zur Lichtführung mittels innerer Totalreflexion dient.

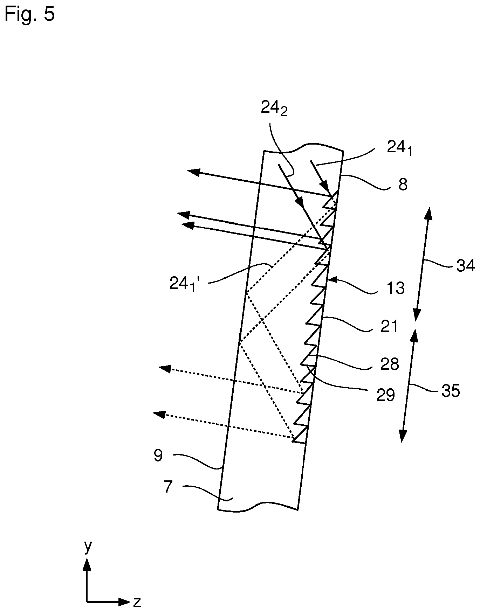

Wie in der vergrößerten Darstellung in Fig. 5 ersichtlich ist, kann der Auskoppelabschnitt 21 mehrere nebeneinander angeordnete teilreflektive Facetten 28 aufweisen, die durch teilreflektive Flanken 29 oder transparente Flanken 29 verbunden sind. Dies führt zu dem Vorteil, dass ein Lichtbündel 24₁, das auf eine Facette 28 in einem ersten Bereich 34 des Auskoppelabschnitts 21 trifft, zum Teil zur Austrittspupille 25 hin umgelenkt wird und zum Teil 24₁' (gestrichelt dargestellt) transmittiert wird. Der transmittierte Teil 24₁' wird an der Vorderseite 8 totalreflektiert, läuft durch die Flanke 29 im ersten Bereich 34 des Auskoppelabschnitts 21 und trifft nach erneuter Totalreflexion an der Rückseite 9 auf eine weitere teilreflektive Facette 28 (in einem zweiten Bereich 35 des Auskoppelabschnittes 21), an der eine erneute Umlenkung in Richtung zur Austrittspupille 25 erfolgt.

Es ist auch ein Strahlverlauf möglich, bei dem der durch die Facette 28 im ersten Bereich 34 transmittierte Teil zunächst durch die Flanke 29 läuft und dann auf die nächste Facette 28 im ersten Bereich 34 trifft und von dieser umgelenkt wird, wie für das Strahlenbündel 24₂ schematisch dargestellt ist. Auch an der nächsten Facette 28 kann wiederum ein Teil transmittiert werden, der dann nach erneuter Totalreflexion an Vorder- und Rückseite 8, 9 auf eine weitere Facette 28 im zweiten Bereich 35 trifft und von dieser umgelenkt wird. In dieser Art und Weise wirkt der Auskoppelabschnitt 21 als Pupillenexpander.

Die Facetten 28 sind somit in gleicher Weise vergrabene Facetten 28 wie die Facetten 26 des Einkoppelabschnitts 20. Die Facetten 26, 28 können sich bis zur Vorderseite 8 erstrecken oder können von der Vorderseite 8 beabstandet sein.

Die Facetten 26 des Einkoppelabschnittes 20 sowie die Facetten 28 des Auskoppelabschnittes 21 können so ausgebildet sein, dass neben der reinen Strahlumlenkung auch noch eine abbildende Wirkung realisiert wird. Die Form und Position der Facetten läßt sich z.B. mittels einer Optimierungsrechnung bestimmen. Dabei geht man von einer gekrümmten reflektiven Fläche aus, die die gewünschte abbildende Wirkung bereitstellt und die man dann durch die Facetten 26, 28 annähert. Dabei können die einzelnen Facetten 26, 28 plan oder gekrümmt sein. Ein derartiges Vorgehen ist beispielsweise in der WO 2010/097442 A1 und in der WO 2010/097439 A1 beschrieben, wobei die entsprechende Beschreibung samt Figuren dieser Druckschriften hiermit in die vorliegende Offenbarung aufgenommen wird.

Die Reflektivität der Facetten 26, 28 kann konstant sein. Es ist jedoch auch möglich, dass die Reflektivität in Richtung der Strahlführung zu- oder abnimmt.

Bei der hier beschriebenen Ausführungsform der beschriebenen Anzeigevorrichtung 1 erfolgt die Einkopplung des virtuellen Bildes in das Gesichtsfeld des Benutzers über das linke Brillenglas 3. Natürlich ist auch eine Einkopplung über das rechte Brillenglas 4 möglich. Des weiteren kann die Anzeigevorrichtung 1 so ausgebildet sein, dass Bilder über beide Brillengläser 3, 4 eingespiegelt werden. Dies kann z.B. in der Art durchgeführt werden, dass ein dreidimensionaler Bildeindruck entsteht.

Die Brillengläser 3, 4 können z.B. aus Glas oder aus Kunststoff hergestellt sein.

## Patentansprüche

1. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik, die ein Brillenglas (3, 4) aufweist und die das erzeugte Bild im auf den Kopf aufgesetzten Zustand der Haltevorrichtung (2) so abbildet, dass es der Benutzer als virtuelles Bild wahrnehmen kann,
wobei das Bilderzeugungsmodul (5) einen flächigen Lichtmodulator mit einer Vielzahl von Pixeln, von denen jeweils ein Lichtbündel (24, 24'), die zusammen ein Gesamtstrahlenbündel (33) bilden, ausgehen kann, aufweist,
wobei das Brillenglas (3, 4) einen eine Vorderseite (8) und eine Rückseite (9) aufweisenden Brillenglaskörper (7),
mit, in Draufsicht auf das Brillenglas (3, 4) gesehen, einem Einkoppelabschnitt (20) in einem Randbereich (12) des Brillenglases (3, 4) und einem Auskoppelabschnitt (21) in einem Mittelbereich (13) des Brillenglases (3, 4),
mit zwei gegenüberliegenden Reflexionsflächen (8, 9) im Bereich des Einkoppelabschnittes (20),
und mit Facetten (26), die im Bereich des Einkoppelabschnittes (20) im Brillenglaskörper (7) zwischen den beiden Reflexionsflächen (8, 9) eingebettet sind, aufweist,
**dadurch gekennzeichnet, dass**
die Facetten (26) im Bereich des Einkoppelabschnittes (20) in Richtung vom Einkoppel- zum Auskoppelabschnitt (20, 21) in einem ersten und einem daran anschließenden zweiten Bereich (30, 31) nebeneinander angeordnet sind,
wobei der zweite Bereich (31) in der Richtung vom Einkoppel- zum Auskoppelabschnitt (20, 21) an den ersten Bereich (30) anschließt,
wobei die Ausdehnung des ersten Bereiches (30) und des daran anschließenden zweiten Bereiches (31) in der Richtung vom Einkoppel- zum Auskoppelabschnitt (20, 21) so gewählt ist, dass sie der Ausdehnung des auf sie treffenden Gesamtstrahlenbündels (33) entspricht,
wobei die Facetten (26) im ersten Bereich (30) teilreflektiv oder reflektiv sind, die Facetten (26) im zweiten Bereich (31) teilreflektiv sind und unmittelbar benachbarte Facetten (26) im zweiten Bereich durch eine Flanke (27) verbunden sind, die teiltransparent oder transparent ist,
wobei das Brillenglas (3, 4) dazu geeignet ist, die Lichtbündel (24, 24') von Pixeln des erzeugten Bildes, die über den Einkoppelabschnitt (20) des Brillenglases in das Brillenglas (3, 4) eingekoppelt sind, im Brillenglas (3, 4) durch Reflexionen bis zum Auskoppelabschnitt (21) zu führen und über den Auskoppelabschnitt (21) aus dem Brillenglas (3, 4) auszukoppeln,
und wobei die Facetten (26) im ersten Bereich (30) die zur Einkopplung auf sie treffenden Lichtbündel (24) zumindest zum Teil zur zweiten Reflexionsfläche (9) reflektieren, an der zur Führung der Lichtbündel (24) eine Reflexion in Richtung zur ersten Reflexionsfläche (8) stattfindet, wobei dadurch auf die Flanken (27) im zweiten Bereich (31) treffende Lichtbündel (24) durch die Flanken (27) bis zur ersten Reflexionsfläche (8) laufen und an der ersten Reflexionsfläche (8) zur Führung der Lichtbündel reflektiert und nach der Reflexion an der ersten Reflexionsfläche (8) durch die teilreflektiven Facetten (26) im zweiten Bereich (31) transmittiert werden.

2. Anzeigevorrichtung nach Anspruch 1, bei der die erste Reflexionsfläche (8) durch die Vorderseite gebildet ist.

3. Anzeigevorrichtung nach Anspruch 1 oder 2, bei der die zweite Reflexionsfläche (9) durch die Rückseite gebildet ist.

4. Anzeigevorrichtung nach Anspruch 1, bei der die erste und/oder zweite Reflexionsfläche zwischen Vorder- und Rückseite (8, 9) ausgebildet ist.

5. Anzeigevorrichtung nach einem der obigen Ansprüche, bei dem die erste und/oder zweite Reflexionsfläche plan ausgebildet ist.

6. Anzeigevorrichtung nach einem der obigen Ansprüche, bei der die Reflektivität der ersten Reflexionsfläche in Richtung vom Einkoppel- zum Auskoppelabschnitt (20, 21) hin zunimmt.

7. Anzeigevorrichtung nach einem der obigen Ansprüche, bei dem die Reflektivität der Facetten (26, 28) in Richtung vom Einkoppel- zum Auskoppelabschnitt (20, 21) hin zunimmt.

8. Anzeigevorrichtung nach einem der obigen Ansprüche, bei der der Einkoppelabschnitt (20) und/oder der Auskoppelabschnitt (21) eine abbildende Wirkung aufweisen/aufweist.

9. Anzeigevorrichtung nach einem der obigen Ansprüche, bei der der Einkoppelabschnitt (20) eine Kollimationswirkung aufweist.

## Claims

1. Display device having
a holder (2) that can be fitted on the head of a user,
an image-generating module (5) secured to the holder (2), which generates an image, and
an imaging optical system secured to the holder (2), which comprises a spectacle lens (3, 4) and which, when the holder (2) is fitted on the head, images the generated image such that the user can perceive it as a virtual image,
wherein the image-generating module (5) comprises a two-dimensional light modulator with a plurality of pixels, from each of which a light bundle (24, 24') can emerge which together form a total bundle of beams (33),
wherein the spectacle lens (3, 4) comprises a spectacle lens body (7) comprising a front side (8) and a rear side (9),
with, seen in top view onto the spectacle lens (3, 4), a coupling-in section (20) in an edge region (12) of the spectacle lens (3, 4) and a coupling-out section (21) in a central region (13) of the spectacle lens (3, 4),
with two opposing reflecting surfaces (8, 9) in the region of the coupling-in section (20),
and with facets (26), which are embedded in the region of the coupling-in section (20) in the spectacle lens body (7) between the two reflecting surfaces (8, 9),
**characterized in that**
the facets (26) are arranged next to each other in the region of the coupling-in section (20) in the direction from the coupling-in to the coupling-out section (20, 21) in a first and an adjoining second region (30, 31),
wherein the second region (31) adjoins the first region (30) in the direction from the coupling-in to the coupling-out section (20, 21),
wherein the extension of the first region (30) and the adjoining second region (31) in the direction from the coupling-in to the coupling-out section (20, 21) is chosen such that it corresponds to the extension of the total bundle of beams (33) striking the first and second regions,
wherein the facets (26) in the first region (30) are partially reflective or reflective, the facets (26) in the second region (31) are partially reflective and directly neighbouring facets (26) in the second region are connected by a face (27) which is partially transparent or transparent,
wherein the spectacle lens (3, 4) is suitable for guiding light bundles (24, 24', 24") of pixels of the generated image, which are coupled into the spectacle lens (3, 4) via the coupling-in section (20) of the spectacle lens, in the spectacle lens (3, 4) by reflections to the coupling-out section (21) and coupling them out of the spectacle lens (3, 4) via the coupling-out section (21),
and wherein the facets (26) in the first region (30) reflect the light bundles (24) striking them for the coupling-in at least partially to the second reflecting surface (9), at which a reflection in the direction to the first reflecting surface (8) takes place for the guiding of the light bundles (24), wherein light bundles (24) striking the faces (27) in the second region (31) thereby run through the faces (27) to the first reflecting surface (8) and are reflected on the first reflecting surface (8) for the guiding of the light bundles and, after the reflection, transmitted through the partially reflective facets (26) in the second region (31).

2. Display device according to claim 1, in which the first reflecting surface (8) is formed by the front side.

3. Display device according to claim 1 or 2, in which the second reflecting surface (9) is formed by the rear side.

4. Display device according to claim 1, in which the first and/or the second reflecting surface is/are formed between the front and the rear side (8, 9).

5. Display device according to one of the above claims, in which the first and/or the second reflecting surface is/are formed flat.

6. Display device according to one of the above claims, in which the reflectivity of the first reflecting surface increases in the direction from the coupling-in to the coupling-out section (20, 21).

7. Display device according to one of the above claims, in which the reflectivity of the facets (26, 28) increases in the direction from the coupling-in to the coupling-out section (20, 21).

8. Display device according to one of the above claims, in which the coupling-in section (20) and/or the coupling-out section (21) has/have an imaging effect.

9. Display device according to one of the above claims, in which the coupling-in section (20) has a collimation effect.

## Revendications

1. Dispositif d'affichage comprenant
un dispositif de maintien (2) pouvant être posé sur la tête d'un utilisateur,
un module de génération d'images (5) fixé sur le dispositif de maintien (2), lequel génère une image, et
une optique de reproduction fixée sur le dispositif de maintien (2), qui présente un verre de lunettes (3, 4) et qui reproduit l'image générée dans l'état posé sur la tête du dispositif de maintien (2), de telle sorte que l'utilisateur puisse la percevoir en tant qu'image virtuelle,
le module de génération d'images (5) présentant un modulateur de lumière plat avec une pluralité de pixels depuis lesquels peut à chaque fois sortir un faisceau de lumière (24, 24'), lesquels faisceaux de lumière forment conjointement un faisceau de rayons total (33),
le verre de lunettes (3, 4) présentant un corps de verre de lunettes (7) présentant un côté avant (8) et un côté arrière (9),
avec, vu en vue de dessus sur le verre de lunettes (3, 4), une portion de couplage (20) dans une région de bord (12) du verre de lunettes (3, 4) et une portion de découplage (21) dans une région centrale (13) du verre de lunettes (3, 4),
avec deux surfaces réfléchissantes opposées (8, 9) dans la région de la portion de couplage (20),
et avec des facettes (26) qui sont incorporées dans la région de la portion de couplage (20) dans le corps de verre de lunettes (7) entre les deux surfaces réfléchissantes (8, 9),
**caractérisé en ce que**
les facettes (26) sont disposées les unes à côté des autres dans la région de la portion de couplage (20) dans la direction de la portion de couplage vers la portion de découplage (20, 21) dans une première région et une deuxième région s'y raccordant (30, 31),
la deuxième région (31) se raccordant à la première région (30) dans la direction de la portion de couplage vers la portion de découplage (20, 21),
l'étendue de la première région (30) et de la deuxième région (31) s'y raccordant, dans la direction de la portion de couplage vers la portion de découplage (20, 21), étant choisie de telle sorte qu'elle corresponde à l'étendue du faisceau de rayons total incident (33) sur celles-ci,
les facettes (26) dans la première région (30) étant partiellement réfléchissantes ou étant réfléchissantes, les facettes (26) dans la deuxième région (31) étant partiellement réfléchissantes et les facettes immédiatement adjacentes (26) dans la deuxième région étant connectées par un flanc (27) qui est semi-transparent ou transparent,
le verre de lunettes (3, 4) étant approprié pour guider les faisceaux de lumière (24, 24') depuis des pixels de l'image générée, qui sont couplés par le biais de la portion de couplage (20) du verre de lunettes dans le verre de lunettes (3, 4), dans le verre de lunettes (3, 4) par des réflexions jusqu'à la portion de découplage (21) et pour les découpler par le biais de la portion de découplage (21) hors du verre de lunettes (3, 4),
et les facettes (26) dans la première région (30) réfléchissant les faisceaux de lumière (24) incidents sur celles-ci pour le couplage, au moins en partie vers la deuxième surface réfléchissante (9), au niveau de laquelle, pour guider les faisceaux de lumière (24), a lieu une réflexion dans la direction de la première surface réfléchissante (8), des faisceaux de lumière (24) incidents sur les flancs (27) dans la deuxième région (31) passant à travers les flancs (27) jusqu'à la première surface réfléchissante (8) et étant réfléchis au niveau de la première surface réfléchissante (8) pour guider les faisceaux de lumière et, après la réflexion au niveau de la première surface réfléchissante (8), étant transmis par les facettes partiellement réfléchissantes (26) dans la deuxième région (31).

2. Dispositif d'affichage selon la revendication 1, dans lequel la première surface réfléchissante (8) est formée par le côté avant.

3. Dispositif d'affichage selon la revendication 1 ou 2, dans lequel la deuxième surface réfléchissante (9) est formée par le côté arrière.

4. Dispositif d'affichage selon la revendication 1, dans lequel la première et/ou la deuxième surface réfléchissante sont réalisées entre le côté avant et le côté arrière (8, 9).

5. Dispositif d'affichage selon l'une quelconque des revendications précédentes, dans lequel la première et/ou la deuxième surface réfléchissante sont réalisées sous forme plane.

6. Dispositif d'affichage selon l'une quelconque des revendications précédentes, dans lequel la réflectivité de la première surface réfléchissante augmente dans la direction de la portion de couplage vers la portion de découplage (20, 21).

7. Dispositif d'affichage selon l'une quelconque des revendications précédentes, dans lequel la réflectivité des facettes (26, 28) augmente dans la direction de la portion de couplage vers la portion de découplage (20, 21).

8. Dispositif d'affichage selon l'une quelconque des revendications précédentes, dans lequel la portion de couplage (20) et/ou la portion de découplage (21) présentent un effet de reproduction.

9. Dispositif d'affichage selon l'une quelconque des revendications précédentes, dans lequel la portion de couplage (20) présente un effet de collimation.
